# EUROPEAN PATENT APPLICATION

(11) **EP 2 222 122 A1**
(43) Date of publication of application: **25.08.2010**
(21) Application number: 09005179.8
(22) Date of filing: 08.04.2009
(51) Int. Cl.: H04W 52/02

(54) **Method for wake-up detection in a receiver and wake-up receiver**

(30) Priority: 18.02.2009 EP 09002304
(71) Applicant: Austriamicrosystems AG, 8141 Unterpremstätten (AT)
(72) Inventor: Leoncavallo, Ruggero, 8101 Gratkorn (AT)
(74) Representative: Epping - Hermann - Fischer

(57) **Abstract**

A method for wake-up detection in a receiver comprises the following steps: checking for activity on a channel according to a set of parameters (1); when activity is detected, correlating a received pattern with a stored pattern (2); when the received pattern does not correlate with the stored pattern, saving an event of unsuccessful pattern correlation to a memory (4); and evaluating the memory for events of unsuccessful pattern correlation and adjusting the set of parameters used in checking for activity on the channel (5). Further, a wake-up receiver is presented.

## Description

A wake-up receiver monitors the surrounding electromagnetic field in a certain frequency range and turns on a connected main system, for instance a microcontroller, a transceiver or else, every time that certain conditions are verified. One condition, for example, is the detection of a frequency and/or a certain pattern. Thereby, the wake-up receiver generally works in background alongside the main system. Consequently, as long as conditions are not verified, the main system is switched off and only the wake-up receiver is operating. This mode of operation is called listening mode. Thus, the current consumption of a wake-up receiver is very low, e.g. in the range of battery leakage current. A wake-up receiver is supposed to be always on. There are wake-up receivers for different frequency ranges. For instance a low frequency, LF, wake-up receiver is used in the field of, for example, wireless sensors, access control, operator identification, real-time location systems, or active RFID tags.

Another purpose of a wake-up receiver is to detect an event of false wake up caused for instance by noisy environment. In an existing implementation of a wake-up receiver, this task is fulfilled by the connected main system. This means, that the connected main system is required to wake up every time a carrier frequency is detected and to analyze the incoming signal. One drawback of this solution is that the power consumption of the main system is far greater than the consumption of the wake-up receiver. In another implementation of a wake-up receiver, wake-up detection is performed on two levels: in the first level the carrier frequency is checked, and only in case that the incoming signal comprises the right frequency, the second level starts, where a received pattern is correlated and compared with a stored pattern. Thereby the robustness of the system is improved. Nevertheless, changing from wake-up level one to wake-up level two, the current consumption increases. In case the system works in a disturbed environment, it happens that the system often detects a signal with the right frequency in the first level, but pattern correlation in the second level fails. Consequently, the receiver bounces between the first and the second wake-up level entailing a higher average consumption.

It is an objective of the invention to provide a method for wake-up detection in a receiver and a wake-up receiver which reduce the number of false wake-up events and reduce power consumption.

The objective is achieved with the subject matter of the independent patent claims. Embodiments and developments of the invention are subject matter of the dependent claims.

In one embodiment example, a method for wake-up detection in a receiver comprises the following steps:
checking for activity on a channel according to a set of parameters,
when activity is detected, correlating a received pattern with a stored pattern,
when the received pattern does not correlate with the stored pattern, saving an event of unsuccessful pattern correlation to a memory,
evaluating the memory for events of unsuccessful pattern correlation and adjusting the set of parameters used in checking for activity on the channel.

The checking for activity on the channel is based on the set of parameters. After successful activity detection, pattern correlation is performed. In case of a mismatch between the received and the stored pattern, the event of unsuccessful pattern correlation is stored to a memory. That memory is evaluated for events of unsuccessful pattern correlation and the set of parameters is adjusted.

The receiver performs pattern correlation before producing a wake-up signal. Thereby, the method assures that a wake-up signal is provided only when justified. Parasitic wake-up events caused for instance by unsuccessful pattern correlation are not provided to a connected main system. The connected main system does not need to be involved which reduces the overall power consumption. Storing the events of unsuccessful pattern correlation and evaluating the memory for these events enables the receiver to evaluate how noisy the environment is. Subsequently, the set of parameters used for checking for activity on the channel is adjusted to the noise level of the environment. This results in a further reduction on the number of false wake-up events and power consumption.

The channel designates a communication channel between a sender and said receiver. Through the channel signals, e.g. modulated signals of a certain frequency range, e.g. low frequency, are transmitted. Checking for activity on the channel comprises, for instance, detection of a desired frequency in a signal received by an antenna of the receiver, e.g. in a carrier signal. An event of unsuccessful pattern correlation is also designated as false wake-up.

In another embodiment example, adjusting the set of parameters comprises at least one of the following:
reducing the sensitivity of the checking for activity, setting the receiver in a power-down mode for a tuneable amount of time,
changing the channel,
using an on/off duty cycle for the receiver,
changing a duty ratio of the receiver.

Reducing the sensitivity of the checking for activity comprises for example, reducing a gain of an amplifier used in checking for activity. By reducing the sensitivity, the number of false wake-ups is minimized.

A power-down mode for the receiver can be set, for example, in the range of one second to one hour.

Changing the channel is another possibility to react to noisy environment.

By using for example a fifty percent on/off duty cycle, the receiver is switched on for example for two seconds, subsequently the receiver is switched off for two seconds and so on.

Another possibility to adjust the set of parameters is to change the on/off time of the receiver, thereby adapting the duty ratio.

By adapting the set of parameters, the receiver is enabled to react to noisy environment and to decrease the number of false wake-up events.

In another embodiment example, saving the event of unsuccessful pattern correlation to the memory comprises incrementing a counter value in the memory by one and storing the counter value to the memory.

Thereby, the number of unsuccessful pattern correlation events is saved in a counter within the memory.

In another embodiment example evaluating the memory for events of unsuccessful pattern correlation is performed periodically.

In another embodiment example, correlating the received pattern with the stored pattern comprises receiving a preamble, receiving the pattern, and correlating the received pattern with the stored pattern.

After activity is detected in the carrier signal, a signal, e.g. an on/off modulated carrier called preamble followed by the pattern is received. The received pattern is compared to a stored pattern. If no preamble is detected, or if the patterns do not match, an event of unsuccessful pattern correlation is produced and the counter value is incremented.

In one embodiment a wake-up receiver comprises an activity detector, a pattern correlator, a memory for saving events of unsuccessful pattern correlation, and a storage. The activity detector has an input to be supplied with a carrier signal and an output to provide an activity signal as a function of a set of parameters. The pattern correlator has an input which is coupled to the output of the activity detector. The pattern correlator further has an output to provide a first signal indicative of an unsuccessful pattern correlation. The memory is coupled to the output of the pattern correlator. It has an output to provide a second signal indicative of an amount of events of unsuccessful pattern correlation to a control unit. The storage has an input to receive a third signal from the control unit depending on an evaluation of the second signal. The storage serves for saving the set of parameters.

The activity detector analyzes the carrier signal at its input for an activity, for example a desired frequency. This analysis is performed as a function of the set of parameters. As soon as the activity signal is provided, the pattern correlator compares the received pattern with the stored pattern. In case of a mismatch between the received and the stored patterns, the pattern correlator provides the first signal to the memory. The event of unsuccessful pattern correlation is saved. After evaluating the amount of events of unsuccessful pattern correlation, the set of parameters saved in the storage is adapted.

The amount of events of unsuccessful pattern correlation is indicative of a level of disturbance of the environment of the receiver. Depending on the evaluation of the level of disturbance, the parameters used by the activity detector can be adapted to reduce the effect of external disturbers. Thereby, the number of false wake-up events and power consumption are minimized.

The activity detector comprises for instance a variable gain amplifier, an automatic gain control and a frequency detector. By adapting a gain of the amplifier via the automatic gain control, false frequency detection is reduced.

In another embodiment example, the storage for saving the set of parameters is additionally adapted to control the activity detector.

The storage comprises for instance parameters for the setup of the activity detector.

In another embodiment example, the pattern correlator has another output to provide a wake-up signal.

In case that the correlation of received and stored pattern is successful, the pattern correlator produces a wake-up signal. The wake-up signal, for instance, is used as an interrupt to wake up the control unit of, for example, the main system.

As the wake-up signal is only provided in case of a true wake up which means that the carrier signal comprises the right frequency, preamble and pattern, power consumption and the number of false wake-up events are reduced.

In one refinement the receiver further comprises a logic unit which is coupled to the activity detector and to the pattern correlator. The logic unit is adapted to run the receiver, by choice, in a first or in a second level of operation. In the first level of operation only the activity signal is provided. In the second level of operation the activity signal is provided and the pattern correlator is activated to provide either the wake-up signal or the second signal.

In the first level of operation, only the activity detector is activated. When activity, for example, the right frequency is detected, the logic unit sets the receiver in the second level of operation by additionally activating the pattern correlator. In case of a successful pattern correlation the pattern correlator provides the wake-up signal. In case the pattern correlation fails, the pattern correlator provides the first signal.

By adapting the sensitivity of the first level of operation through the set of parameters used by the activity detector, the receiver is prevented from bouncing between the first and the second level of operation because of a noisy environment. Thereby, the current consumption is reduced.

In another embodiment example, an event of unsuccessful pattern correlation comprises at least one of the following:
interpretation of noise as activity by the activity detector, missing of a preamble in the carrier signal, or
mismatch between received and stored pattern.

In another embodiment example the memory comprises a counter adapted to store a number indicative of the amount of unsuccessful pattern correlation events.

The storage and/or memory are/is implemented for instance as registers.

The text below explains the invention in detail using embodiment examples with reference to the drawings, in which:
Figure 1 shows an embodiment example of a wake-up receiver, and
figure 2 shows an embodiment example of a method for wake-up detection in a receiver.

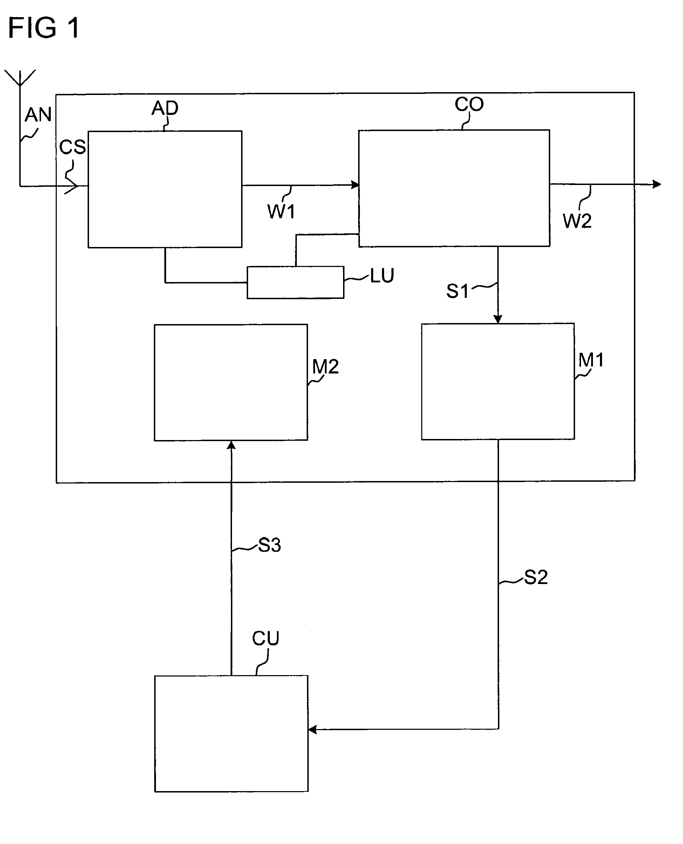

Figure 1 shows an embodiment example of a wake-up receiver. The receiver comprises an activity detector AD, a pattern correlator CO, a memory M1, a storage M2, and a logic unit LU. The activity detector AD has an input to receive a carrier signal CS, and an output to provide an activity signal W1. The pattern correlator CO has an input to receive the activity signal W1, a first output to provide a first signal S1, and a second output to provide a wake-up signal W2. The memory M1 has an input to receive the first signal S1 and an output to provide a second signal S2. The storage M2 has an input to receive a third signal S3. The logic unit LU is connected to the activity detector AD and the pattern correlator CO. Further, an antenna AN is depicted which is coupled to the activity detector AD and provides the carrier signal CS. Finally a control unit CU is shown which is coupled externally to the receiver. The control unit CU receives the second signal S2 and provides the third signal S3 as a function of an evaluation of the second signal S2. The logic unit LU is adapted to run the receiver in a first and a second level of operation.

The memory M1 comprises a counter for storing a number of unsuccessful pattern correlation events. The storage M2 comprises a set of parameters used to control the activity detector AD. The activity detector AD comprises for instance a variable gain amplifier, an automatic gain control and a frequency detector.

In the first level of operation, the activity detector AD is activated by the logic unit LU. The carrier signal CS which is received via the antenna AN is checked for activity, for example for the presence of a certain frequency. As soon as activity is detected, the second level of operation starts. The pattern correlator CO is activated additionally by the logic unit LU. The pattern correlator CO searches the activity signal W1 for a preamble. If a preamble is successfully detected, the pattern correlator CO receives a pattern. If no preamble is detected, the pattern correlator CO provides the first signal S1 comprising the unsuccessful pattern correlation event to the memory M1. If the pattern correlation is successful, the pattern correlator CO provides a wake-up signal W2. In case of a mismatch between received and stored pattern, the pattern correlator CO produces the first signal S1. As soon as the first signal S1 is provided, the logic unit LU sets the receiver back into the first level of operation.

The control unit CU periodically evaluates the memory M1 for the amount of unsuccessful pattern correlation events. Unsuccessful pattern correlation is caused by a mismatch between received and stored pattern, or the missing of the preamble or the misinterpretation of noise or a disturber as the desired frequency. Therefore, the amount of unsuccessful pattern correlation events, also denoted as false wake-up events, is indicative of the level of disturbance of the surrounding of the receiver. By evaluating the amount of false wake-up events stored in the memory M1, the control unit CU determines the level of disturbance or noise and adapts the set of parameters in the storage M2 via the third signal S3. By this adaptation, the sensitivity of the activity detector AD is adjusted to the level of noise of the surroundings.

As the information concerning the level of disturbance of the environment is stored within the receiver, the control unit CU does not need to be involved in the assessment of the environment. The control unit CU can retrieve the information of the memory M1 any time it see fit, so no real-time operation is needed. As the receiver is kept in the first level of operation until a real activity is detected, current consumption is minimized. Exploiting the intelligence of the receiver, the activity detector AD by the time adapts more and more to the level of disturbance of the environment. The number of false wake-up events is reduced further.

In an exemplary implementation, a gain of variable gain amplifier within the activity detector AD is adjusted to reduce the sensitivity of the activity detector AD.

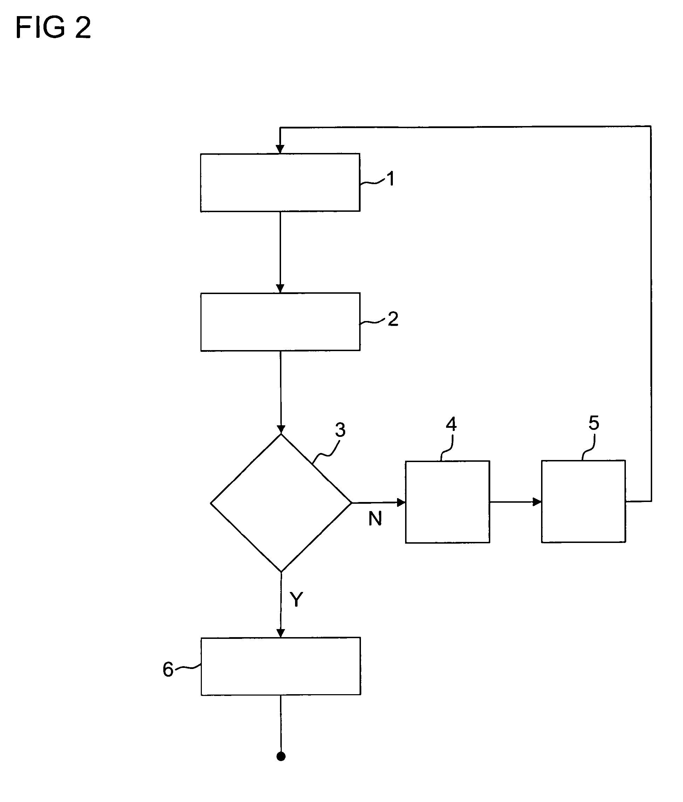

Figure 2 shows an embodiment example of a method for a wake-up detection in a receiver. The method starts with the first level of operation 1 where the checking for activity on a channel according to a set of parameters is performed. When activity is detected, the second level of operation 2 is entered. Here a received pattern is correlated with a stored pattern. Next a determination whether the pattern correlation was successful or not is performed in step 3. If the pattern correlation was not successful, an event of unsuccessful pattern correlation is saved in step 4. Next, the amount of events of unsuccessful pattern correlation is evaluated and the set of parameters used in the first level of operation is adjusted in step 5. Subsequently, the system restarts from step 1.

In case of a successful pattern correlation, a wake-up signal is generated in step six.

Reference List
- AD: activity detector
- CS: carrier signal
- W1: activity signal
- W2: wake-up signal
- M1: memory
- M2: storage
- S1, S2, S3: signal
- CU: control unit
- LU: logic unit
- AN: antenna
- CO: pattern correlator
- 1, 2, 3, 4, 5, 6: step

## Claims

1. Method for wake-up detection in a receiver comprising the following steps:
- checking for activity on a channel according to a set of parameters (1),
- when activity is detected, correlating a received pattern with a stored pattern (2),
- when the received pattern does not correlate with the stored pattern, saving an event of unsuccessful pattern correlation to a memory (4),
- evaluating the memory for events of unsuccessful pattern correlation and adjusting the set of parameters used in checking for activity on the channel (5).

2. Method according to claim 1,
wherein adjusting the set of parameters (5) comprises at least one of the following:
- reducing the sensitivity of the checking for activity,
- setting the receiver in a power-down mode for a tuneable amount of time,
- changing the channel,
- using an on/off duty cycle for the receiver,
- changing a duty ratio of the receiver.

3. Method according to claim 1 or 2,
wherein saving the event of unsuccessful pattern correlation to the memory (4) comprises incrementing a counter value in the memory by one and storing the counter value to the memory.

4. Method according to one of claims 1 to 3,
wherein evaluating the memory for events of unsuccessful pattern (5) correlation is performed periodically.

5. Method according to one of claims 1 to 4,
wherein correlating the received pattern with the stored pattern (2) comprises
receiving a preamble, receiving the pattern, correlating the received pattern with the stored pattern.

6. Wake-up receiver comprising:
- an activity detector (AD) with an input to be supplied with a carrier signal (CS) and an output to provide an activity signal (W1) as a function of a set of parameters,
- a pattern correlator (CO) with an input coupled to the output of the activity detector (AD) and with an output to provide a first signal (S1) indicative of an unsuccessful pattern correlation,
- a memory (M1) for saving events of unsuccessful pattern correlation coupled to the output of the pattern correlator (CO) and having an output to provide a second signal (S2) indicative of an amount of events of unsuccessful pattern correlation to a control unit (CU),
- a storage (M2) for saving the set of parameters with an input to receive a third signal (S3) from the control unit (CU) depending on an evaluation of the second signal (S2).

7. Receiver according to claim 6,
wherein the storage (M2) for saving the set of parameters is additionally adapted to control the activity detector (AD).

8. Receiver according to claims 6 or 7,
wherein the pattern correlator (CO) has another output to provide a wake-up signal (W2).

9. Receiver according to one of claims 6 to 8,
further comprising a logic unit (LU) coupled to the activity detector (AD) and to the pattern correlator (CO), the logic unit being adapted to run the receiver, by choice, in a first or in a second level of operation
wherein
- in the first level of operation only the activity signal (W1) is provided, and
- in the second level of operation the activity signal (W1) is provided and the pattern correlator (CO) is activated to provide either the wake-up signal (W2) or the first signal (S1).

10. Receiver according to one of claims 6 to 9,
wherein an event of unsuccessful pattern correlation comprises at least one of the following:
interpretation of noise as activity by the activity detector (AD),
missing of a preamble in the carrier signal (CS), or mismatch between received and stored pattern.

11. Receiver according to one of claims 6 to 10,
wherein the memory (M1) comprises a counter adapted to store a number indicative of the amount of unsuccessful pattern correlation events.
